# EUROPEAN PATENT SPECIFICATION

(11) **EP 3 753 152 B1**
(45) Date of publication and mention of the grant of the patent: **11.11.2026**
(21) Application number: 19705353.1
(22) Date of filing: 14.02.2019
(51) Int. Cl.: H04L 1/00, H04L 1/1812, H04L 1/08, H04L 5/00

(54) **IMPROVED CONTROL MESSAGE RECEPTION AT A RECEIVER**
VERBESSERTER EMPFANG VON STEUERNACHRICHTEN AN EINEM EMPFÄNGER
RÉCEPTION AMÉLIORÉE DE MESSAGE DE COMMANDE AU NIVEAU D'UN RÉCEPTEUR

(30) Priority: 15.02.2018 EP 18156975
(43) Date of publication of application: 23.12.2020
(73) Proprietor: Fraunhofer-Gesellschaft zur Förderung der angewandten Forschung e.V., 80686 München (DE)
(72) Inventor: GÖKTEPE, Baris, 12487 Berlin (DE); FEHRENBACH, Thomas, 10711 Berlin (DE); HELLGE, Cornelius, 10587 Berlin (DE); THOMAS, Robin, 10781 Berlin (DE); WIRTH, Thomas, 14532 Kleinmachnow (DE); SCHIERL, Thomas, 13156 Berlin (DE)
(74) Representative: Hersina, Günter
(86) International application number: PCT/EP2019/053737
(87) International publication number: WO 2019/158664

(56) References cited:
- CA-A1- 2 882 789
- TW-A- 201 347 476
- INTEL CORPORATION: "Ultra-reliability for NR PDCCH", vol. RAN WG1, no. Prague, Czech Republic; 20171009 - 20171013, 8 October 2017 (2017-10-08), XP051340571, Retrieved from the Internet <URL:http://www.3gpp.org/ftp/Meetings_3GPP_SYNC/RAN1/Docs/> [retrieved on 20171008]
- INTEL CORPORATION: "Satisfying ultra-reliability targets for NR PDCCH", vol. RAN WG1, no. Qingdao, P.R. China; 20170627 - 20170630, 26 June 2017 (2017-06-26), XP051299757, Retrieved from the Internet <URL:http://www.3gpp.org/ftp/Meetings_3GPP_SYNC/RAN1/Docs/> [retrieved on 20170626]

## Description

The present application relates to the field of wireless communication networks or systems, more specifically to systems providing for an ultra-reliable communication. Embodiments relate to an approach allowing a receiver or a user equipment, UE, to evaluate whether a control message received from a transmitter, like a base station or like another UE, is actually a control message which is intended for this specific UE.

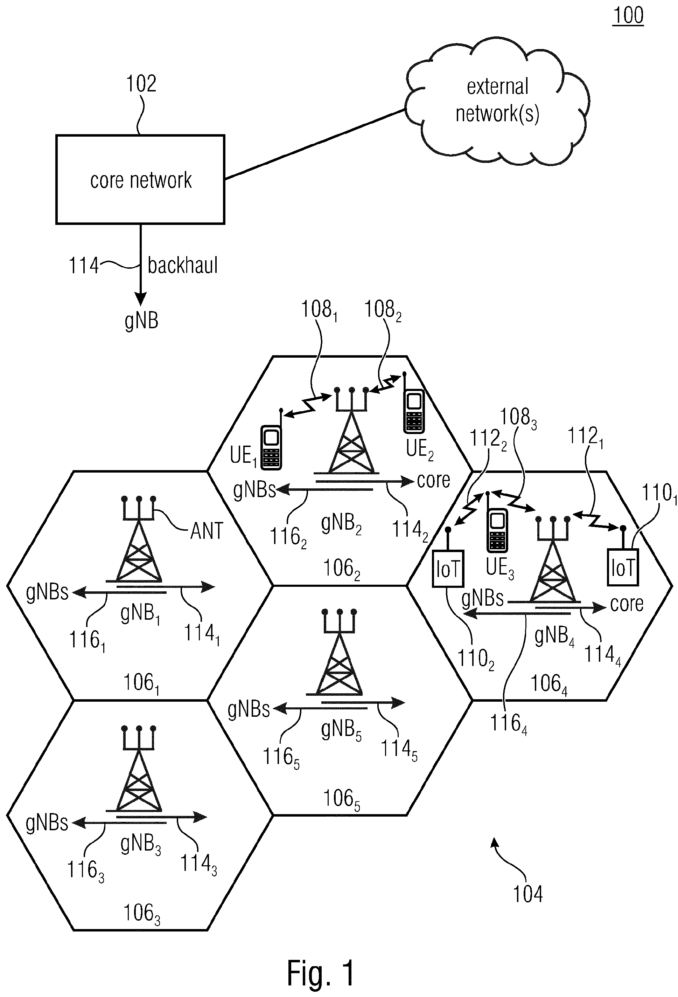

Fig. 1 is a schematic representation of an example of a terrestrial wireless network 100 including a core network 102 and a radio access network 104. The radio access network 104 may include a plurality of base stations gNB₁ to gNB₅, each serving a specific area surrounding the base station schematically represented by respective cells 106₁ to 106₅. The base stations are provided to serve users within a cell. The term base station, BS, refers to as gNB in 5G networks, eNB in UMTS/LTE/LTE-A/ LTE-A Pro, or just BS in other mobile communication standards. A user may be a stationary device or a mobile device and can be referred to as user equipment (UE), user terminal or mobile terminal (MT). Further, the wireless communication system may be accessed by mobile or stationary Internet-of-Things (IoT) devices which connect to a base station or to a user equipment. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. Further, Fig. 1 shows two loT devices 110₁ and 110₂ in cell 106₄, which may be stationary or mobile devices. The IoT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1 by the arrows pointing to "core". The core network (CN) 102 may be connected to one or more external networks. Further, some or all of the respective base station gNB₁ to gNB₅ may connected, e.g. via the S1 or X2 interface or XN interface in NR, with each other via respective backhaul links 116₁ to 116₅, which are schematically represented in Fig. 1 by the arrows pointing to "gNBs". The wireless network or communication system depicted in Fig. 1 may by an heterogeneous network having two distinct overlaid networks, a network of macro cells with each macro cell including a macro base station, like base station gNB₁ to gNB₅, and a network of small cell base stations (not shown in Fig. 1), like femto or pico base stations.

For data transmission a physical resource grid may be used. The physical resource grid may comprise a set of resource elements or logical channels to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. In another example, two UEs are communicating in a direct mode (D2D). In LTE networks, this interface is defined as PC5. Here, the physical channels include sidelink control information (SCI) carried over a physical sidelink control channel (PSCCH), and user data, transmitted via physical sidelink data channel (PSDCH).

The physical signals may comprise reference signals (RS), synchronization signals and the like. The resource grid may comprise a frame or radioframe having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

In the wireless communication network as shown in Fig. 1 the radio access network 104 may be a heterogeneous network including a network of primary cells, each including a primary base station, also referred to as a macro base station. Further, a plurality of secondary base stations, also referred to as small cell base stations, may be provided for each of the macro cells.

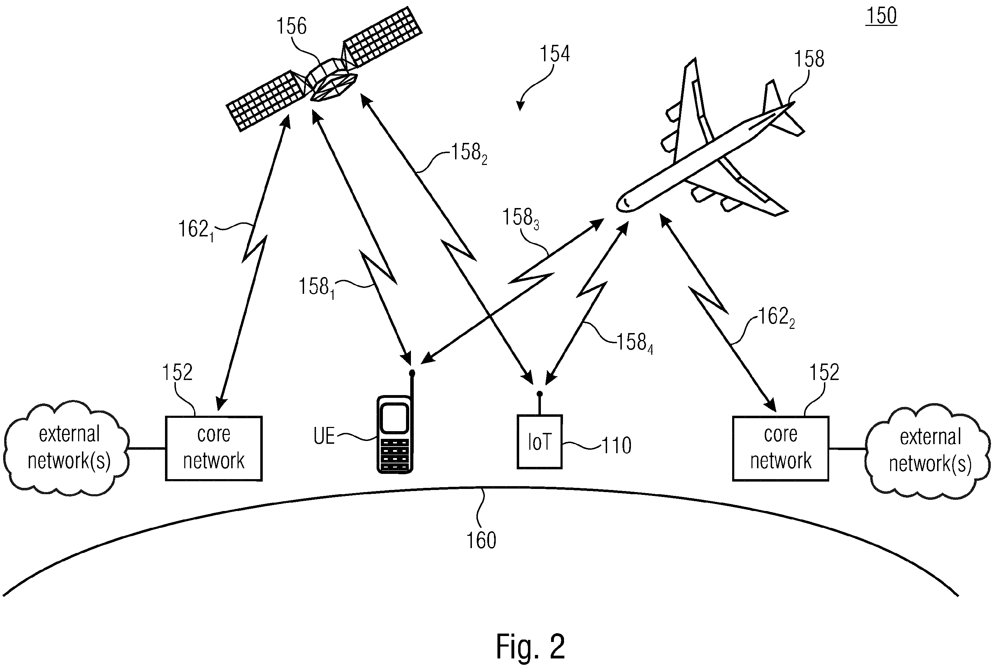

In addition to the above described terrestrial wireless network also non-terrestrial wireless communication networks exist. Fig. 2 is a schematic representation of an example of a non-terrestrial wireless communication network 150 including a core network 152 and a radio access network 154. Other than the terrestrial wireless network of Fig. 1, the non-terrestrial wireless network 150 includes a plurality of spaceborne transceivers 156, like satellites, and/or airborne transceivers 158, like unmanned aircraft systems. The respective spaceborne or airborne transceivers 156, 158 may be implemented in respective spaceborne or airborne vehicles, like the above mentioned satellites or unmanned aircraft systems. The transceivers 156 and 158 are provided to serve one or more users, like the UE or the loT device 110 shown in Fig. 2, which are provided on or above ground 160. The UE and the loT device may be devices as described above with reference to Fig. 1. The arrows 158₁ to 158₄ schematically represent uplink/downlink connections for communicating data between the user UE, 110 and the respective transceiver 156, 158. The transceivers 156, 158 are connected to the core network 152 as is schematically represented by the arrows 162₁, 162₂. The above described non-terrestrial wireless communication network or system may operate in a similar way as the terrestrial system described above with reference to Fig. 1, for example in accordance with the LTE-Advanced Pro standard or the 5G or NR, New Radio, standard.

In wireless communication networks as described above, various services may be implemented. Some services may require an ultra-reliable communication, for example ultra-reliable low latency communication, URLLC, or highly-reliable low latency communication, HRLLC, services. URLLC targets a high reliability at very low latencies so that systems implementing ultra-low latency services support round trip time, RTT, latencies of only a few milliseconds, for example 1ms RTT. To address such short RTT latencies, known approaches use the above mentioned short transmission time intervals, sTTIs. While the reduced RTT addresses the latency issue, there is still the reliability issue which is closely related to the reliability of the control information received at the UE. While improving the data channel may be straight-forward, for example by lowering the code rate and / or by adapting the modulation and coding scheme, this is not so straight-forward in the control channel. For example, the supported lowest code rate in the physical downlink control channel, PDCCH, may be limited due the substantially fixed, less flexible structure of the PDCCH. With regard to the receipt of control messages in the control channel, the missing probability and the false positive probability are to be observed, especially for ultra-reliable service or for URLLC services. The missing probability is the probability to miss a control message, like a DCI message, in the control channel, and the false positive probability is the probability to erroneously detect or identify a control message not intended for the UE, which may happen, for example, in case a of blind decoding process that produces a valid CRC (see below) although the signal detected was no DCI message for the UE. Note, in case of the LTE technology (LTE, LTE-A, LTE-A Pro), due to backwards compatibility reasons, choosing a different channel coding scheme to better support URLLC services is not possible. This would break the compatibility with existing LTE user terminals. Furthermore, the techniques proposed in this invention can equally be applied to future radio standards, e.g. 5G NR, and thus bring reliability enhancements to future cellular technologies.

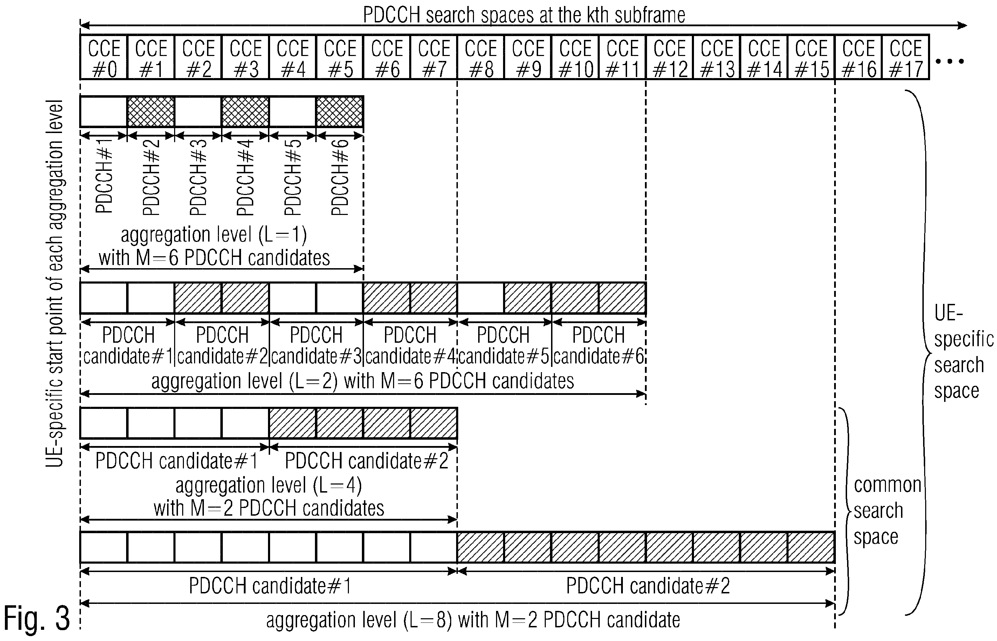

A downlink, DL, radio frame in a wireless communication network includes a PDCCH region which defines the locations or places where a specific PDCCH may be located. The PDCCH region is searched by the UEs upon receiving a signal. Each PDCCH carries a control message, like the downlink control information, DCI, which is identified by the UE-specific radio network temporary identifier, RNTI. The RNTI is encoded, for example, in the CRC attachment of the DCI. The CRC of the DCI may be scrambled with the UE-specific RNTI, like the C-RNTI. Fig. 3 schematically illustrates an example of a PDCCH region having a plurality of PDCCHs formed of different numbers of control-channel elements, CCEs. Depending on the payload size of the DCI format to be transmitted and the channel conditions, the base station may select an appropriate aggregation level defining the number of CCEs to be used for transmitting the DCI packet. In NR (5G), the control message is located in the PDCCH, including one or more control-channel elements, CCEs within a control-resource set, CORESET.

As can be seen from Fig. 3, the PDCCH search space is divided into a common search space, that may be monitored by all UEs which are served by a base station, and into a UE-specific search space that is monitored by at least one UE. Each UE performs a blind decoding on the whole PDCCH region so as to find one or more DCI packets dedicated for this UE. The DCI packets indicate, for example, the resources and other parameters to be used during an upcoming data transmission.

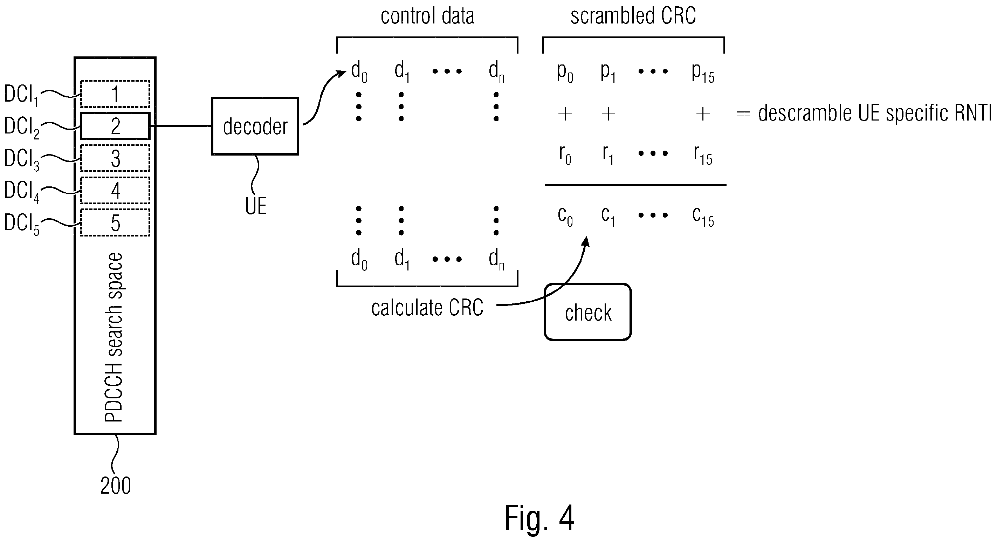

As mentioned above, a UE may obtain its one or more DCI packages by searching the PDCCH region which includes a blind decoding/blind detection approach. Fig. 4 schematically illustrates the blind decoding process to find within the PDCCH region one or more DCI packages for a specific UE. Fig. 4 schematically illustrates the PDCCH region 200, also referred to as the PDCCH search space. Five DCI packages DCI₁ to DCI₅ are illustrated in the PDCCH search space 200, and a specific UE including an appropriate decoder searches the PDCCH search space 200 for a valid CRC to find DCI packets for this specific UE. As it is depicted in Fig. 4, the convolutional decoder obtains from DCI package DCI₂ the data including the control data and the scrambled CRC. The control data and the scrambled CRC are separated, the scrambled CRC is descrambled using the UE specific RNTI, the resulting CRC is checked against the CRC calculated from the control data, and a match of the resulting CRC and the calculated CRC indicates that the DCI package DCI₂ is actually the control message for the UE which decoded the control message.

However, the blind decoding approach described above may also find a match due to a wrong decoding resulting in random data in the PDCCH search space, i.e., data not representing a DCI message for the specific UE may be erroneously detected as a valid control message, also referred to as a false-positive DCI. Such a false decoding may occur with a probability of approx. *P_{FA}* = 1 - (1 - 2⁻¹⁶)*^{M},* where M is the number of blind detection attempts carried out by the UE. For example, in wireless communication systems as described above the probability for such a false alarm rate is very low, approx.. 10⁻⁴ (see e.g., 3GPP TDOC R1-1719503: Design Impact on Reliability for LTE URLLC). In other words, when a control messages decoded from a control region of a radio signal by a receiver, like a UE, may be decoded erroneously, i.e., is actually not a control message for this UE, with a probability of approx.. 10⁻⁴. Basically, this is not a problem for standard or regular communication services. However, ultra-reliable communication services may require a probability for a packet error to be as low as 10⁻⁵ so that a false-positive DCI detected with a probability of approx.. 10⁻⁴ causes a problem as the UE, on the basis of the false-positive DCI, which may be a control message for another UE, causes the UE to configure itself for a data transmission on resources where no data for the UE is received so that the data transmission towards the UE may not be successful. This may lead to an additional delay until the UE, for example, in a subsequent downlink frame, decodes a correct or true-positive DCI allowing the UE to set its parameters for receiving data from the base station on the correct resources. Clearly, while such a delay might not be an issue in conventional or standard communication services, in services requiring an ultra-reliable communication such decoding/detection of false-positive control messages may increase the delay. Furthermore, this erroneous processing requires processing resources and thus drains the UE's battery power.

INTEL CORPORATION, "Ultra-reliability for NR PDCCH", vol. RAN WG1, no. Prague, Czech Republic; 20171009 - 20171013, (20171008), 3GPP DRAFT; R1-1717381, and INTEL CORPORATION, "Satisfying ultra-reliability targets for NR PDCCH", vol. RAN WG1, no. Qingdao, P.R. China; 20170627 - 20170630, (20170626), 3GPP DRAFT; R1-1710550, relate to the design of a DL control channel for an NR system and discuss NR PDCCH design aspects to support URLLC applications, assuming that general principles of NR PDCCH design are reused.

It is noted that the information in the above section is only for enhancing the understanding of the background of the invention and therefore it may contain information that does not form the prior art that is already known to a person of ordinary skill in the art.

Starting from the prior art described, it is an object underlying the present invention to provide an improved approach for reliably determining a detected control message from a radio signal to be a valid control message for the receiver.

This object is achieved by t a receiver according to claim 1, by a system according to claim 13 and by a method according to claim 14. Favorable further developments are defined in the pending claims.

Embodiments of the present invention are now described in further detail with reference to the accompanying drawings, in which:
- Fig. 1: shows a schematic representation of an example of a terrestrial wireless communication system;
- Fig. 2: is a schematic representation of an example of a non-terrestrial wireless communication network;
- Fig. 3: schematically illustrates an example of a PDCCH region having a plurality of PDCCHs formed of different numbers of control-channel elements, CCEs;
- Fig. 4: schematically illustrates the blind decoding process to find within the PDCCH region one or more DCI packages for a specific UE;
- Fig. 5: is a schematic representation of a wireless communication system for communicating information between a plurality of transmitters and a plurality of UEs operating in accordance with the present invention;
- Fig. 6: shows a mapping between two PDCCH regions and how a UE combines a DCI and a signal from the two PDCCH regions for determining whether a DCI for the UE is valid or not, wherein Fig. 6(a) illustrates a scenario in which the UE accepts a DCI message as a valid DCI message, and Fig. 6(b) illustrates a scenario in which a UE rejects a DCI message as a false-positive DCI message;
- Fig. 7: illustrates a DCI format message based on a known DCI format 1 message modified in accordance with an embodiment of the present invention;
- Fig. 8: illustrates an embodiment in accordance with which the DCI message and its duplicate are within the same PDCCH region;
- Fig. 9: illustrates embodiments for arranging multiple duplicates of the control message in the control region, wherein Fig. 9(a) shows a comb-structure, and Fig. 9(b) shows a n-offset structure;
- Fig. 10: illustrates examples for arranging multiple duplicates of the control message in the control region in accordance with a tree structure as shown in Fig. 10(a) or in accordance with a tree structure as shown in Fig. 10(b);
- Fig. 11: illustrates the decoding of three duplicates in a common search space; and
- Fig. 12: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned.

To address the problem of erroneously detecting data from a control region of a radio signal leading to a false-positive control message for the decoding UE, in accordance with the inventive approach, for a receiver, UE, one or more duplicated packets of the same control message, like a DCI, are included into the radio signal. Each control message may be uniquely identifiable, for example, by the UE's C-RNTI as described above. Once the UE detected a control message in the control region, on the basis of information known at the UE, for example on the basis of information being preconfigured in the UE or on the basis of information derived from the detected control message, the UE reads a signal from a location in the control region indicated by the information. On the basis of this signal the UE evaluates the detected control message so as to determine as to whether the control DCI message is valid or invalid, e.g., is a true-positive DCI (valid) or false-positive DCI (invalid) message for the decoding UE. For example, the detected DCI message and the signal may be combined or correlated so that on the basis of the combined message or the correlation value the validity of the detected DCI message may be evaluated.

For implementing the above summarized inventive approach, a receiver, a transmitter, a wireless communication network and methods as described below are provided.

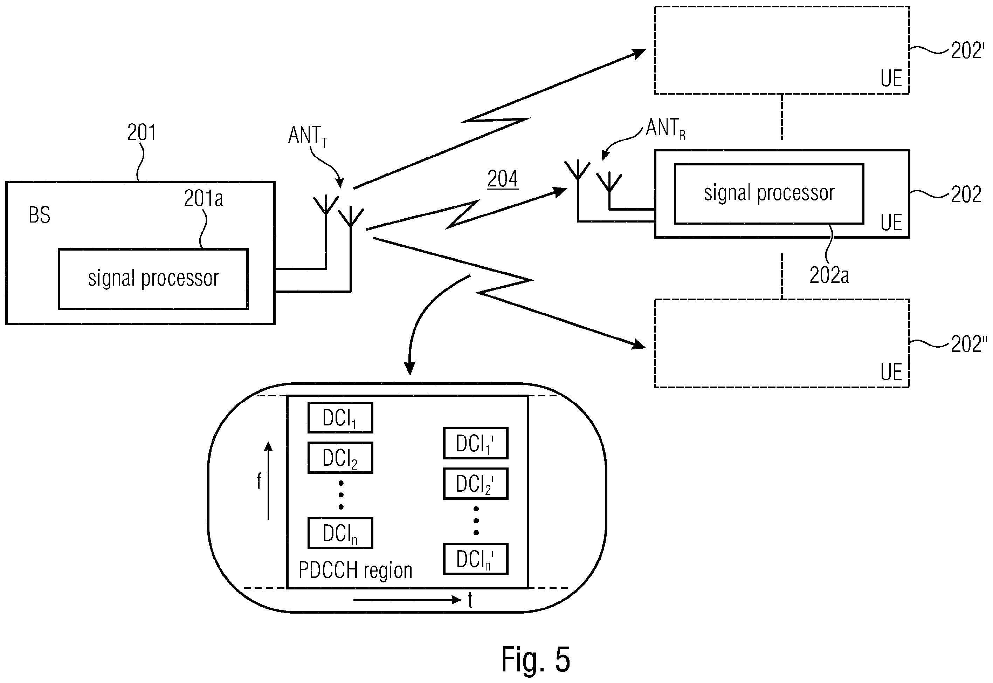

Embodiments of the present invention may be implemented in the wireless communication system or network as depicted in Fig. 1 or in Fig. 2 including transmitters or transceivers, like base stations, and receivers or users, like mobile or stationary terminals or loT devices, as mentioned above. Fig. 5 is a schematic representation of a wireless communication system for communicating information between a transmitter 201, like a base station, and a plurality of receivers 202, 202', 202", like UEs, which are served by the base station 201. The base station 201 and the UEs 202 may communicate via a wireless communication link or channel 204, like a radio link. The base station 201 includes one or more antennas ANT_{T} or an antenna array having a plurality of antenna elements, and a signal processor 201a. The base station 201 may operate in accordance with the inventive teachings described herein. The UEs 202 include one or more antennas ANT_{R} or an antenna array having a plurality of antenna elements, and a signal processor 202a. The respective UEs 202, 202' and 202" of Fig. 5 may operate in accordance with the inventive teachings described herein.

In accordance with an aspect of the inventive approach, a receiver 202 is provided. The receiver 202 receives, e.g., via its antenna ANT_{R}, the radio signal 204 from the transmitter 201 of the wireless communication system. The transmitter 201 serves the plurality of receivers 202, 202', 202". The radio signal 204 includes for the plurality of receivers 202, 202', 202" served by the transmitter 201 a plurality of control messages DCI₁ to DCIₙ, and a redundant control message DCI₁'-DCIₙ' for at least one of the control messages DCI₁-DCIₙ. In accordance with embodiments, redundant control messages may be provided for a plurality or for all of the control messages. In accordance with other embodiments, the radio signal 204 may include one or more control messages for which no redundant control message is provided, for example for legacy UEs or receivers not operating in accordance with the inventive approach. The receiver 202, e.g., using its signal processor 202a, detects a control message DCI from the radio signal 204. Responsive to the detecting of the control message DCI, the receiver 202 detects from another location in the radio signal a signal. The receiver 202 determines the detected control message DCI as a specific control message for the receiver based on the signal detected from the other location.

In accordance with another aspect of the inventive approach, a transmitter 201 is provided. The transmitter 201 serves a plurality of receivers 202, 202', 202" of the wireless communication system. The transmitter 201, e.g., using its signal processor 201a, provides the radio signal 204 which includes for the plurality of receivers 202, 202', 202" served by the transmitter 201 a plurality of control messages DCI₄-DCIₙ and a redundant control message DCI₁'-DCIₙ' for at least one of the control messages. Also with regard to the transmitter it is noted that, in accordance with embodiments, redundant control messages may be provided for a plurality or for all of the control messages. In accordance with other embodiments, the radio signal 204 may include one or more control messages for which no redundant control message is provided, for example for legacy UEs or receivers not operating in accordance with the inventive approach.

Thus, in accordance with the inventive approach a predefined number of duplicated packets of the same control message, also referred to as DCI or DCI message in the following, is sent for the same UE. The original packet and the duplicated packet may be sent in the same PDCCH region having, for example, a predefined duration in the time domain and spanning a plurality of subcarriers in the frequency domain. In accordance with other embodiments, the packet and its duplicated version may be sent in different PDCCH regions, for example the original packet may be sent in a first PDCCH region of a specific duration spanning a first number of carriers in the frequency domain, while the duplicated packet may be sent in a second PDCCH region having the same or a different duration in the time domain and spanning a different set of subcarriers in the frequency domain. In accordance with yet other embodiments, the second PDCCH region may be in another spatial domain, e.g., the first PDCCH region may be part of a transmission transmitted from a one or more first antennas of a transmitter, like a base station, and the second PDCCH region may be part of a transmission transmitted from one or more second antennas of the transmitter. The codeword in the second PDCCH region can be send using any spatial diversity technique, such as space-time or space-frequency block codes, e.g. using schemes such as Alamouti coding utilizing the complex conjugate or negative complex conjugate of the original codeword transmitted in the first PDCCH region.

A duplicate packet of a DCI message comprises a packet including redundant information but having a smaller or equal or larger packet size than the original DCI message or DCI packet. The duplicated packet, in accordance with embodiments, may be an exact copy of the packet with identical content and using the same or different encoding scheme, or it may be a packet of the same or different size of the original packet containing redundant information with respect to the initial packet. For example, when including redundant information, the redundant control message may include a certain redundancy version of the control message to provide for an incremental redundancy, or it may include an error correction code for the control message as originally sent. In accordance with other embodiments, the relevant control message, as mentioned above, may be a duplicate of the control message.

The inventive approach, by sending the duplicate packages, lowers the false positive detection probability. For example, the DCI message detected and the signal detected at the known location in the radio signal may be combined. For example, when combining the detected DCI message and the signal from the other location into a combined DCI message, the signal quality of the combined DCI message is higher than the signal quality of the detected DCI message in case the signal represents data related to the detected DCI message, and the detected DCI message is considered an true-positive or valid DCI message for the detecting UE. On the other hand, in case the signal does not represent data related to the detected DCI message, the signal quality of the combined signal is lower than the signal quality of the detected DCI message, and the detected DCI message is considered an false-positive or invalid DCI message for the detecting UE. Signal quality can be measured by the associated path probabilities in trellis-based (e.g. Viterbi) or successive cancellation-based decoders or the convergence behavior in belief-propagation-based decoders, e.g., Sum-Product, Min-Sum and Turbo-Decoders.

In accordance with other embodiments, it may be judged whether combining the DCI message and the signal from the other location into the combined DCI message forms a decodable message at the UE, which indicates a valid DCI message, whereas a combined DCI message not being decodable at the UE indicates an invalid DCI message for the UE. Not being decodable means that the CRC check of the combined message is invalid in contrary to the CRC check of the false-positive DCI.

In accordance with yet further embodiments, for example when using a duplicate of the original DCI message, instead of combining the detected DCI message and the signal from the other location, a correlation of the detected DCI message and the signal from the other location may be performed. A high correlation value, e.g., being equal to or exceeding a predefined threshold, indicates that the DCI message and the signal from the other location relate to the same DCI message so that the DCI message is judged to be true-positive or valid, whereas a low correlation value, e.g., being below the predefined threshold, indicates that the DCI message and the signal from the other location are not related with each other so that the detected DCI message is considered a false-positive or invalid DCI message for the decoding UE.

When the signal obtained from the further location includes data representing the duplicate packet of the detected DCI message, the UE may combine both DCI packets or transmissions to achieve, for example, a lower code rate and a frequency diversity without introducing a new DCI format using, for example, a large CRC. Thus, the inventive approach, by sending the duplicate packages may also lower the missing probability.

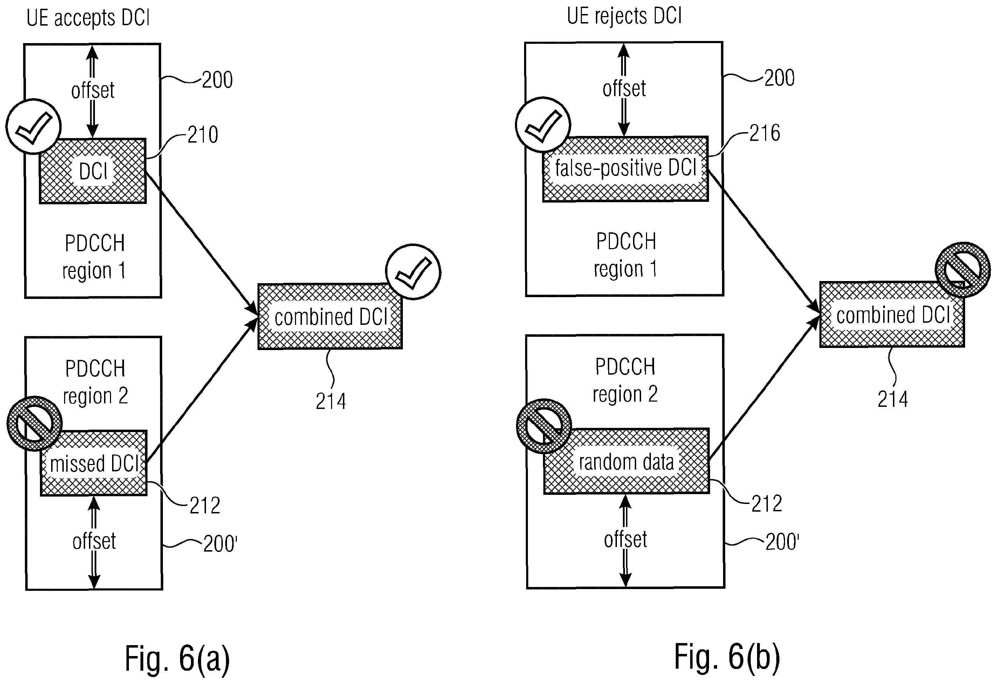

The above summarized functionality of embodiments of the inventive approach will now be described in more detail with reference to Fig. 6 which shows a mapping between two PDCCH regions and how a UE combines a DCI and a signal from the respective regions for determining whether a DCI for the UE is valid or not. Fig. 6(a) illustrates a scenario in which the UE accepts a DCI message as a valid DCI message, and Fig. 6(b) illustrates a scenario in which a UE rejects a DCI message as a false-positive DCI message which is not a DCI message for the UE. In Fig. 6, it is assumed that the original DCI message is transmitted in a first PDCCH region 200, and the duplicate version is transmitted in a second PDCCH region 200'. In accordance with other embodiments, the DCI messages and the duplicates thereof may also be transmitted in the same PDCCH region. In Fig. 6(a), the UE detects from the first PDCCH region 200 a DCI message 210, for example by performing a blind decoding of all the DCI messages in the PDCCH region 200 in a way as described above with reference to Fig. 4. Responsive to the detecting of the first DCI message 210 from the first region 200, the UE reads a signal from a second location or region 212 in the second PDCCH region 200' at which a redundant version or a duplicate of the DCI message 210 is located. The UE knows the location 212 of the duplicate version, however, decoding at this part may fail, for example due to a bad signal in view of noise or interference on the channel. Nevertheless, some signal is obtained from the location or region 212 which includes or represents data or information associated with the duplicate of the DCI message 210. Therefore, when combining the DCI message 210 detected from the first region 200 and the signal from region 212 in the second control region 200', the combined message will be decodable for the UE or will have a signal quality that is increased when compared to the signal quality of the detected DCI message 210 only. Therefore, the UE recognizes the combined DCI message as a valid or true-positive DCI message for the UE. Naturally, in case the DCI message is PDCCH region 200' can be detected and decoded, but not the DCI message in PDCCH region 200, the same approach as mentioned above applies, i.e., the UE can still determine whether the detected DCI message from region 200' is valid.

In Fig. 6(a) the DCI 210 and the area 212 in the respective PDCCH regions 200, 200' are indicated at a position offset from an upper/lower border of the respective region, and the UE knows, due to the offset which is signaled to the UE what data from the respective PDCCH region is to be combined into the combined DCI message 214.

Fig. 6(b) shows a scenario in which a UE recognizes a false-positive DCI message. The UE erroneously detects from the PDDCH region 200 a DCI message 216 which is actually not intended for the UE. Responsive to the detecting of the DCI message 216, the UE, on the basis of the known offset, reads a signal from region 212 from the second PDCCH region 200'. The detected DCI message 216 and the signal from area 212 are combined into the combined DCI message 214. However, in case the UE is preconfigured with the location of its duplicate DCI message in the radio signal, the signal at area 212 related to a DCI message that is different from the detected DCI message 216. In case the detected DCI message 216 includes the information where its duplicate may be found, the UE detecting the signal from the area 212 will not be able to detect any meaningful information from this location because the duplicate DCI message is associated with a RNTI of a different UE. In either case, the signal from the area 212 will not provide any information related to the DCI message 216 so that, when combined with the DCI message 216, a signal quality of the combined message is lower than the signal quality of the DCI message 216 or the combined message may not be decodable, and the UE to recognize the DCI message 216 as a false-positive DCI message and rejects the DCI message.

In the embodiments described with reference to Fig. 6(a) and Fig. 6(b) it has been assumed that the duplicate DCI messages include some redundancy information which, when combined with the DCI allows for a judgement as to whether the combined DCI message is valid or not. When using duplicates of the control messages, in accordance with other embodiments, a correlation of the detected DCI message 210, 216 and the signal from the other region 212 may be performed to determine the validity of a combined DCI message.

As described above, the UE is aware of a location of its duplicate or redundant DCI message, and the base station may configure an offset, for example with reference to a border of the PDCCH region 200, 200' in a way as depicted in Fig. 6. The UE may be aware of positions of transmission of duplicates of its DCI message relative to the other transmissions. The location of the duplicate, like the offset, may be preconfigured using, for example, RRC signaling. For example, when considering the embodiment described with reference to Fig. 6, the UE detecting the DCI messages using blind detecting, due to the pre-configuration of the offset, is aware of a position where to look for the redundant control message. In the embodiment of Fig. 6(a), in case the UE detects a valid DCI message from the first PDCCH region 200', the signal the UE may retrieve from the known location is also associated with the detected DCI message, whereas in Fig. 6(b) the signal from the location 212 in the second PDCCH region 200' is not related to the DCI message 216.

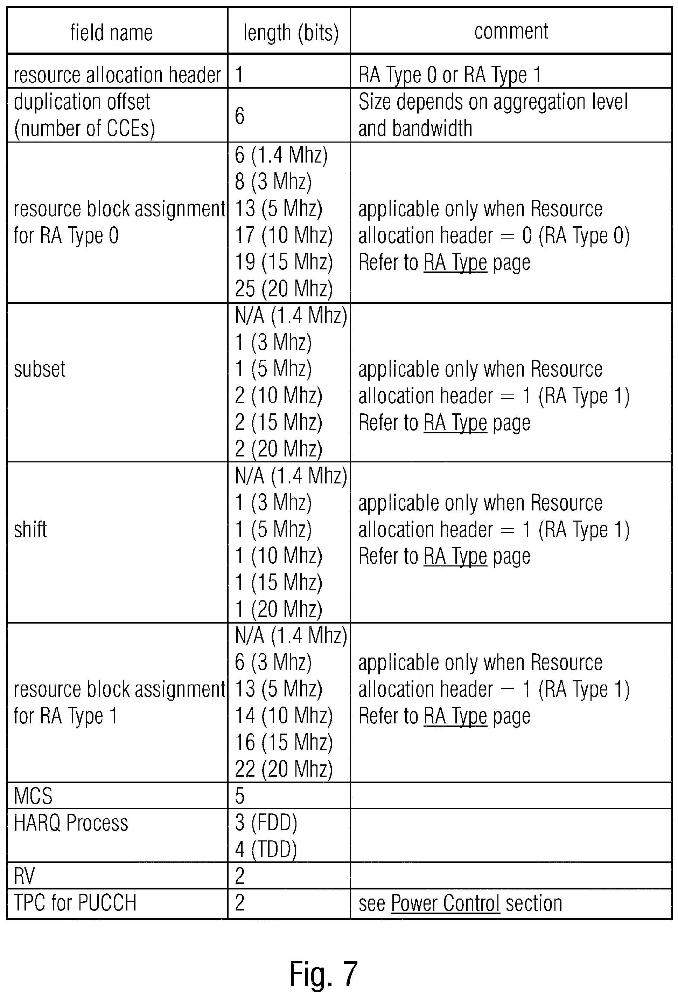

In accordance with yet other embodiments, rather than preconfiguring the offset, the DCI message itself may include the information about the location, like the offset. A new DCI field may be included into the DCI message indicating, e.g., the duplication offset in a number of CCEs from a border of a PDCCH region. The size of the offset may depend on the aggregation level and bandwidth. Fig. 7 illustrates a DCI format message based on a known DCI format 1 message modified in accordance with an embodiment and in which the second entry or field indicates the duplication offset. In accordance with other embodiments, the number of CCEs or another indication of the offset may be signaled, or an indication of a specific preconfigured offset may be included, like an index referring to one of a plurality of preconfigured offsets know at the UE. This approach achieves the same effects as described above with reference to Fig. 6 while increasing the flexibility of DCI scheduling.

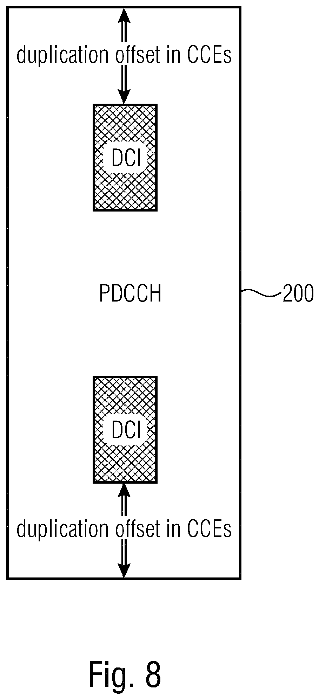

Fig. 8 illustrates an embodiment in accordance with which the DCI message and its duplicate are within the same PDCCH region 200, e.g., with the same offset which is indicated in the DCI message itself or with which the UE is preconfigured.

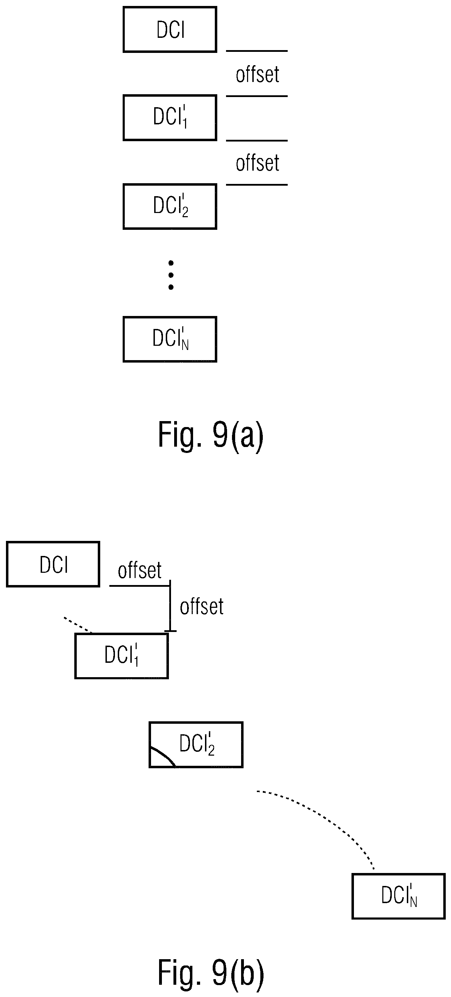

In accordance with other embodiments, the present invention is not limited to only a single duplicate packet of the DCI message, rather, the DCI redundancy can be further enhanced by signaling n duplicates, n = 1, 2, 3, ... N. The duplicates may be arranged in a comb structure, as shown in Fig. 9(a) or in an n-offset structure as shown in Fig. 9(b), with variable or fixed offsets. In the comb structure the DCI duplicates may be located at offsets in the time or frequency domain only, whereas in the n-offset structure the duplicates may be located with an offset in time and frequency.

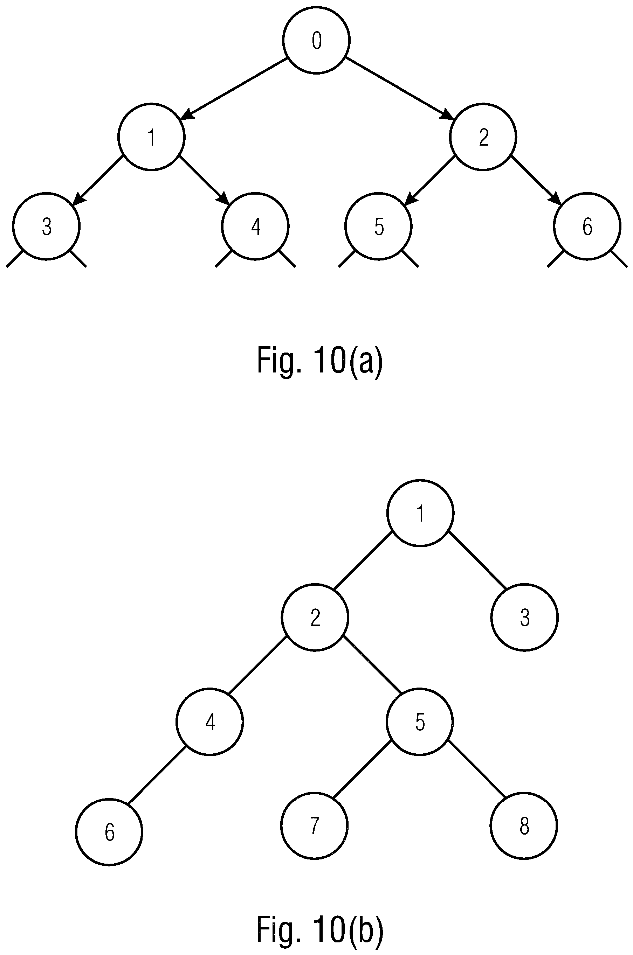

In accordance with examples not covered by the claims, the n duplicates may be arranged in accordance with tree structures as shown in Fig. 10(a) and Fig. 10(b). The control message is located in the frequency domain, in the time domain or in the spatial domain according to a binary tree structure, wherein the original control message is stored in a root node and the plurality of redundancy versions of the control message are stored in respective child nodes. The offset may be indicated by a corresponding root/father-node. Based on a signal quality of a signal at a child node of the tree structure, the receiver may follow a decoding path in the tree with the highest key performance indicator, KPI, thereby requiring only log k decodings/detections for k redundancy versions and thus improve the speed of the blind search of the UE by limiting the search space within the DCI.

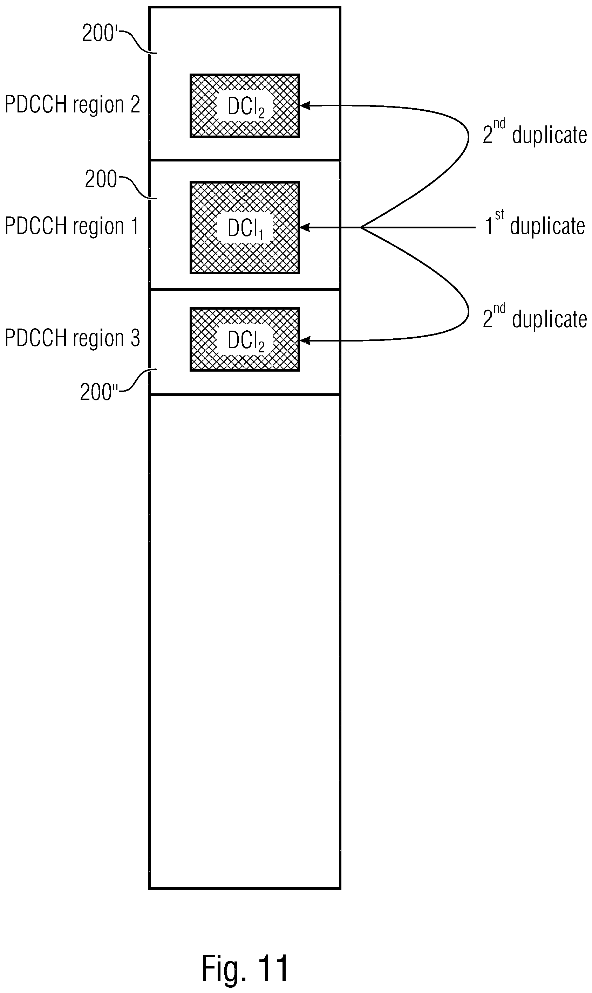

In accordance with embodiments, the UE may detect or decode the respective DCI messages and their duplicates sequentially or using x ≤ n parallel decoding processes depending on the decoding capabilities/capacity of the UE and combine the DCls accordingly thereby reducing the detection of false positives even further. When placing the redundant DCIs according in a tree structure within the PDCCH region, this may reduce the speed of detecting DCls within the search space to O(log n), where n is the size of the search space, and dependent on the latency requirements and decoding success, the UE may utilize the search space accordingly and only check blind detects/decodes in log n offset steps, as is schematically depicted in Fig. 11.

In accordance with the embodiments described above, the radio signal is part of a downlink, DL, communication from a transmitter, like a base station, to the receiver. In such a scenario the control message may be a DCI message, the radio signal comprises a downlink frame, the downlink frame comprises at least one physical downlink control channel, PDCCH, region as the control region, the PDCCH region including a plurality of PDCCHs, each carrying a DCI message or a redundant DCI message, and the receiver detects a control message from the radio signal and from the signal at the other location using a blind detection based on the control message's CRC and the receiver's RNTI.

However, the inventive approach is not limited to a DL communication. In accordance with other embodiments, the radio signal may be part of a sidelink, SL, communication from a transmitter, like a user equipment, to the receiver as it may occur in a V2V or a V2X or a D2D communication. In such a scenario the control message may be a SCI message, the radio signal comprises sidelink frame, the downlink frame comprises at least one physical sidelink control channel, PSCCH, region as the control region, the PSCCH region including a plurality of PSCCHs, each carrying a SCI message or a redundant SCI message, and the receiver is configured to detect a control message from the radio signal and from the signal at the other location using a blind detection based on the control message's CRC and the receiver's RNTI.

In accordance with embodiments, the control message may be located in the PDCCH or the PSCCHH and includes one or more control-channel elements, CCEs, within a control-resource set, CORESET.

In accordance with embodiments, the wireless communication system includes a terrestrial network, or a non-terrestrial network, or networks or segments of networks using as a receiver an airborne vehicle or a spaceborne vehicle, or a combination thereof.

In accordance with embodiments, the receiver comprises one or more of: a mobile or stationary terminal, an IoT device, a ground based vehicle, an aerial vehicle, a drone, a building, or any other item or device provided with network connectivity enabling the item/device to communicate using the wireless communication system, like a sensor or actuator, and the transmitter comprises one or more: a macro cell base station, or a small cell base station, or a spaceborne vehicle, like a satellite or a space, or an airborne vehicle, like a unmanned aircraft system (UAS), e.g., a tethered UAS, a lighter than air UAS (LTA), a heavier than air UAS (HTA) and a high altitude UAS platforms (HAPs), or any transmission/reception point (TRP) enabling an item or a device provided with network connectivity to communicate using the wireless communication system.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

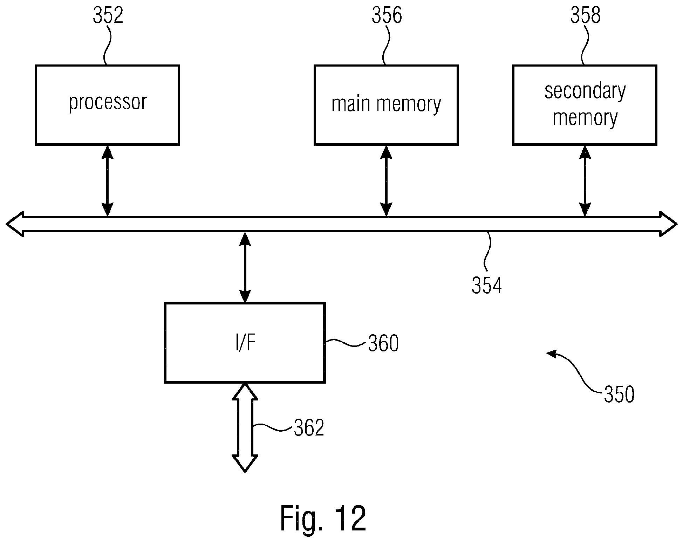

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 12 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

## Claims

1. A receiver (202),
wherein the receiver (202) is configured to receive a radio signal (204) from a transmitter (201) of a wireless communication system serving a plurality of receivers (202, 202', 202"), the radio signal (204) including for the plurality of receivers (202, 202', 202") served by the transmitter (201) a plurality of control messages (200) and a redundant control message (212) for at least one of the plurality of control messages (200),
wherein the receiver (202) is configured to detect a control message of the plurality of control messages (200) from a first part of a common control region of the radio signal (204) or from a first control region of the radio signal (204),
wherein the receiver (202) is configured to detect, responsive to detecting the control message of the plurality of control messages (200), a signal from a certain location in the radio signal (204), the certain location being a second part of the common control region of the radio signal (204) or a second control region of the radio signal (204), and
wherein the receiver (202) is configured to determine the control message of the plurality of control messages (200) as a specific control message for the receiver (202) based on the signal detected from the certain location,
**characterized in that**
in case the control message of the plurality of control messages (200) and the redundant control message (212) are in a common control region of the radio signal (204), the certain location is indicated by an offset in time and/or frequency and/or spatial domain relative to the detected control message (200) in the common control region, or relative to a border of the common control region, or
in case the control message of the plurality of control messages (200) is in a first control region of the radio signal (204) and the redundant control message (212) is in a second control region of the radio signal (204), the certain location is indicated by an offset in time and/or frequency and/or spatial domain relative to a border of the second control region, and
the redundant control message (212) contains redundant information with respect to the control message of the plurality of control messages (200).

2. The receiver (202) of claim 1, wherein
the radio signal (204) comprises a first radio signal, which defines a first link between the transmitter (201) and the receiver (202), and a second radio signal, which defines a second link between the transmitter (201) and the receiver (202),
wherein common control region is part of one of the first and second radio signals, or is part of both radio signals, and
wherein the first control region is part one of the first and second radio signals, and the second control region is part of the other one of the first and second radio signals.

3. The receiver (202) of claim 1 or 2, wherein the offset defines an offset in time and/or frequency and/or space, or defines an offset in a number of control message elements, each control message of the plurality of control messages (200) being formed of one or more control message elements.

4. The receiver (202) of any one of the preceding claims, wherein the receiver (202) is preconfigured with the certain location, or wherein the certain location is indicated in the control message of the plurality of control messages (200).

5. The receiver (202) of claim 4, wherein the control message of the plurality of control messages (200) explicitly indicates the certain location or includes a reference to one of a plurality of preconfigured locations.

6. The receiver (202) of any one of the preceding claims, wherein
the radio signal (204) includes at least one further redundant control message (212) for the control message of the plurality of control messages (200), and
the receiver (202) is configured to detect from at least one further location in the radio signal a further signal, and to determine the control message (200) of the plurality of control messages (200) as the specific control message for the receiver (202) based on the signal detected from the certain location and/or the further signal detected from the at least one further location.

7. The receiver (202) of claim 6, wherein the further redundant control message (212) comprises
- a certain redundancy version of the control message of the plurality of control messages (200) to provide for an incremental redundancy, or
- an error correction code for the control message of the plurality of control messages (200), or
- a duplicate of the control message of the plurality of control messages (200).

8. The receiver (202) of claim 7, wherein the redundant control message (212) comprises a first redundancy version of the control message (200), and wherein respective further redundant control messages (212) comprise respective further redundancy versions.

9. The receiver (202) of any one of claims 6 to 8, wherein, in the control region of the radio signal (204), the redundant control message (212) and the at least one further redundant control message (212) are offset relative to the specific control message
in time so as to define a comb structure, or
in frequency so as to define a n-offset structure, n being the number of redundant control messages (212) in the radio signal (204), or
in time and frequency so as to define a tree structure.

10. The receiver (202) of claim 9, wherein, based on a signal quality of a signal at a child node of the tree structure, the receiver (202) is configured to follow a decoding path in the tree with the highest key performance indicator, KPI, thereby requiring only log k decoding attempts for k redundancy versions.

11. The receiver (202) of claim 9 or 10, wherein the control message (200) is located in the frequency domain, in the time domain or in the spatial domain according to a binary tree structure, wherein two or more redundancy versions of the control message of the plurality of control messages (200) are stored in respective child nodes, and the offset is indicated by a corresponding root/father-node.

12. The receiver (202) of any one of the preceding claims, wherein
the radio signal (204) is part of a sidelink, SL, communication from a transmitter (201), like a user equipment, to the receiver (202),
the control message of the plurality of control messages (200) comprises a SCI message,
the radio signal (204) comprises sidelink frame,
the sidelink frame comprises at least one physical sidelink control channel, PSCCH, region as the control region, the PSCCH region including a plurality of PSCCHs, each carrying a SCI message or a redundant SCI message, and
the receiver (202) is configured to detect the control message of the plurality of control messages (200) from the radio signal (204) and from the signal at the certain location using a blind detection based on the control message's CRC and the receiver's RNTI.

13. A wireless communication system, comprising
a plurality of receivers (202, 202', 202"), the plurality of receivers (202, 202', 202") comprising a receiver of any one of the preceding claims, and
a transmitter (201), wherein the transmitter (201) is configured to serve the plurality of receivers (202, 202', 202") of a wireless communication system, and to provide the radio signal (204)including for the plurality of receivers (202, 202', 202") served by the transmitter (201) the plurality of control messages (200) and the redundant control message (212) for at least one of the plurality of control messages (200).

14. A method, comprising:
receiving a radio signal (204) from a transmitter (201) of a wireless communication system serving a plurality of receivers (202, 202', 202"), the radio signal (204) including for the plurality of receivers (202, 202', 202") served by the transmitter (201) a plurality of control messages (200) and a redundant control message (212) for at least one of the plurality of control messages (200),
detecting a control message of the plurality of control messages (200) from a first part of a common control region of the radio signal (204) or from a first control region of the radio signal (204),
responsive to detecting the control message of the plurality of control messages (200), detecting a signal from a certain location in the radio signal (204), the certain location being a second part of the common control region of the radio signal (204) or a second control region of the radio signal (204), and
determining the control message of the plurality of control messages (200) as a specific control message for the receiver (202) based on the signal detected from the certain location,
wherein
in case the control message of the plurality of control messages (200) and the redundant control message (212) are in a common control region of the radio signal (204), the certain location is indicated by an offset in time and/or frequency and/or spatial domain relative to the control message of the plurality of control messages (200) in the common control region, or relative to a border of the common control region,
in case the control message of the plurality of control messages (200) is in a first control region of the radio (204) and the redundant control message (212) is in a second control region of the radio signal (204), the certain location is indicated by an offset in time and/or frequency and/or spatial domain relative to a border of the second control region, and
the redundant control message contains redundant information with respect to the one control message of the plurality of control messages (200).

15. A computer program product comprising instructions which, when the program is executed by a computer, cause the computer to carry out the method of claim 14.

## Patentansprüche

1. Ein Empfänger (202),
wobei der Empfänger (202) dazu konfiguriert ist, ein Funksignal (204) von einem Sender (201) eines Drahtloskommunikationssystems zu empfangen, das eine Mehrzahl von Empfängern (202, 202', 202") versorgt, wobei das Funksignal (204) für die Mehrzahl von Empfängern (202, 202', 202"), die von dem Sender (201) versorgt wird, eine Mehrzahl von Steuernachrichten (200) und eine redundante Steuernachricht (212) für zumindest eine der Mehrzahl von Steuernachrichten (200) umfasst,
wobei der Empfänger (202) dazu konfiguriert ist, eine Steuernachricht der Mehrzahl von Steuernachrichten (200) von einem ersten Teil einer gemeinsamen Steuerregion des Funksignals (204) oder von einer ersten Steuerregion des Funksignals (204) zu erfassen,
wobei der Empfänger (202) dazu konfiguriert ist, ansprechend auf das Erfassen der Steuernachricht der Mehrzahl von Steuernachrichten (200) ein Signal von einer bestimmten Stelle in dem Funksignal (204) zu erfassen, wobei die bestimmte Stelle ein zweiter Teil des gemeinsamen Steuerregion des Funksignals (204) oder eine zweite Steuerregion des Funksignals (204) ist, und
wobei der Empfänger (202) dazu konfiguriert ist, die Steuernachricht der Mehrzahl von Steuernachrichten (200) basierend auf dem Signal, das von der bestimmten Stelle erfasst wurde, als eine spezifische Steuernachricht für den Empfänger (202) zu bestimmen,
**dadurch gekennzeichnet, dass**
falls sich die Steuernachricht der Mehrzahl von Steuernachrichten (200) und die redundante Steuernachricht (212) in einer gemeinsamen Steuerregion des Funksignals (204) befinden, die bestimmte Stelle durch einen Versatz in dem Zeit- und/oder Frequenz- und/oder Raumbereich relativ zu der erfassten Steuernachricht (200) in der gemeinsamen Steuerregion oder relativ zu einer Grenze der gemeinsamen Steuerregion angegeben wird oder
falls sich die Steuernachricht der Mehrzahl von Steuernachrichten (200) in einer ersten Steuerregion des Funksignals (204) befindet und sich die redundante Steuernachricht (212) in einer zweiten Steuerregion des Funksignals (204) befindet, die bestimmte Stelle durch einen Versatz in dem Zeit- und/oder Frequenz- und/oder Raumbereich relativ zu einer Grenze der zweiten Steuerregion angegeben wird und
die redundante Steuernachricht (212) redundante Informationen in Bezug auf die Steuernachricht der Mehrzahl von Steuernachrichten (200) enthält.

2. Der Empfänger (202) gemäß Anspruch 1, wobei
das Funksignal (204) ein erstes Funksignal, das eine erste Verknüpfung zwischen dem Sender (201) und dem Empfänger (202) definiert, und ein zweites Funksignal aufweist, das eine zweite Verknüpfung zwischen dem Sender (201) und dem Empfänger (202) definiert,
wobei die gemeinsame Steuerregion Teil eines aus dem ersten und dem zweiten Funksignals ist oder Teil beider Funksignale ist und
wobei die erste Steuerregion Teil eines aus dem ersten und dem zweiten Funksignals ist und die zweite Steuerregion Teil des anderen aus dem ersten und dem zweiten Funksignal ist.

3. Der Empfänger (202) gemäß Anspruch 1 oder 2, wobei der Versatz einen Zeit- und/oder Frequenz- und/oder Raumversatz definiert oder einen Versatz in einer Anzahl von Steuernachrichtelementen definiert, wobei jede Steuernachricht der Mehrzahl von Steuernachrichten (200) aus einem oder mehreren Steuernachrichtelementen gebildet ist.

4. Der Empfänger (202) gemäß einem der vorstehenden Ansprüche, wobei der Empfänger (202) mit der bestimmten Stelle vorkonfiguriert ist oder wobei die bestimmte Stelle in der Steuernachricht der Mehrzahl von Steuernachrichten (200) angegeben ist.

5. Der Empfänger (202) gemäß Anspruch 4, wobei die Steuernachricht der Mehrzahl von Steuernachrichten (200) die bestimmte Stelle ausdrücklich angibt oder einen Hinweis auf eine oder mehrere einer Mehrzahl von vorkonfigurierten Stellen umfasst.

6. Der Empfänger (202) gemäß einem der vorhergehenden Ansprüche, wobei
das Funksignal (204) zumindest eine weitere redundante Steuernachricht (212) für die Steuernachricht der Mehrzahl von Steuernachrichten (200) umfasst und
der Empfänger (202) dazu konfiguriert ist, von zumindest einer weiteren Stelle in dem Funksignal ein weiteres Signal zu erfassen und die Steuernachricht (200) der Mehrzahl von Steuernachrichten (200) basierend auf dem Signal, das von der bestimmten Stelle erfasst wurde, und/oder dem weiteren Signal, das von der zumindest einen weiteren Stelle erfasst wurde, als die spezifische Steuernachricht für den Empfänger (202) zu bestimmen.

7. Der Empfänger (202) gemäß Anspruch 6, wobei die weitere redundante Steuernachricht (212) Folgendes aufweist:
- eine bestimmte Redundanzversion der Steuernachricht der Mehrzahl von Steuernachrichten (200), um eine inkrementelle Redundanz bereitzustellen, oder
- einen Fehlerkorrekturcode für die Steuernachricht der Mehrzahl von Steuernachrichten (200) oder
- ein Duplikat der Steuernachricht der Mehrzahl von Steuernachrichten (200).

8. Die Empfänger (202) gemäß Anspruch 7, wobei die redundante Steuernachricht (212) eine erste Redundanzversion der Steuernachricht (200) aufweist und wobei jeweilige weitere redundante Steuernachrichten (212) jeweilige weitere Redundanzversionen aufweisen.

9. Der Empfänger (202) gemäß einem der Ansprüche 6 bis 8, wobei die redundante Steuernachricht (212) und die zumindest eine weitere redundante Steuernachricht (212) in der Steuerregion des Funksignals (204) relativ zu der spezifischen Steuernachricht wie folgt versetzt sind:
in Bezug auf die Zeit, um eine Kammstruktur zu definieren, oder
in Bezug auf die Frequenz, um eine n-Versatzstruktur zu definieren, wobei n die Anzahl an redundanten Steuernachrichten (212) in dem Funksignal (204) ist, oder
in Bezug auf die Zeit und die Frequenz, um eine Baumstruktur zu definieren.

10. Der Empfänger (202) gemäß Anspruch 9, wobei der Empfänger (202), basierend auf einer Signalqualität eines Signals an einem Tochterknoten der Baumstruktur, dazu konfiguriert ist, einem Decodierungspfad in dem Baum mit der höchsten Leistungskennzahl, KPI, zu folgen, wodurch für k Redundanzversionen nur log k Decodierungsversuche erforderlich sind.

11. Der Empfänger (202) gemäß Anspruch 9 oder 10, wobei sich die Steuernachricht (200) gemäß einer binären Baumstruktur in dem Frequenzbereich, in dem Zeitbereich oder in dem Raumbereich befindet, wobei zwei oder mehr Redundanzversionen der Steuernachricht der Mehrzahl von Steuernachrichten (200) in jeweiligen Kinderknoten gespeichert sind und der Versatz durch einen entsprechenden Wurzel-/Vaterknoten angegeben wird.

12. Der Empfänger (202) gemäß einem der vorhergehenden Ansprüche, wobei
das Funksignal (204) Teil einer Sidelink-, SL-, Kommunikation eines Senders (201), wie eines Nutzergeräts, mit einem Empfänger (202) ist,
die Steuernachricht der Mehrzahl von Steuernachrichten (200) eine SCI-Nachricht aufweist,
das Funksignal (204) einen Sidelink-Frame aufweist,
der Sidelink-Frame zumindest eine Physischer-Sidelink-Steuerungskanal-, PSCCH-, Region als die Steuerregion aufweist, wobei die PSCCH-Region eine Mehrzahl von PSCCH umfasst, von denen jeder eine SCI-Nachricht oder eine redundante SCI-Nachricht trägt, und
der Empfänger (202) dazu konfiguriert ist, die Steuernachricht der Mehrzahl von Steuernachrichten (200) von dem Funksignal (204) und von dem Signal an der bestimmten Stelle unter Verwendung einer Blinderfassung basierend auf dem CRC der Steuernachricht und dem RNTI des Empfängers zu erfassen.

13. Ein Drahtloskommunikationssystem, das folgende Merkmale aufweist:
eine Mehrzahl von Empfängern (202, 202', 202"), wobei die Mehrzahl von Empfängern (202, 202', 202") einen Empfänger gemäß einem der vorhergehenden Ansprüche aufweist, und
einen Sender (201), wobei der Sender (201) dazu konfiguriert ist, die Mehrzahl von Empfängern (202, 202', 202") eines Drahtloskommunikationssystems zu versorgen und das Funksignal (204) bereitzustellen, das für die Mehrzahl von Empfängern (202, 202', 202"), die durch den Sender (201) versorgt wird, die Mehrzahl von Steuernachrichten (200) und die redundante Steuernachricht (212) für zumindest eine der Mehrzahl von Steuernachrichten (200) umfasst.

14. Ein Verfahren, das folgende Schritte aufweist:
Empfangen eines Funksignals (204) von einem Sender (201) eines Drahtloskommunikationssystems, das eine Mehrzahl von Empfängern (202, 202', 202") versorgt, wobei das Funksignal (204) für die Mehrzahl von Empfängern (202, 202', 202"), die von dem Sender (201) versorgt wird, eine Mehrzahl von Steuernachrichten (200) und eine redundante Steuernachricht (212) für zumindest eine der Mehrzahl von Steuernachrichten (200) umfasst,
Erfassen einer Steuernachricht der Mehrzahl von Steuernachrichten (200) von einem ersten Teil einer gemeinsamen Steuerregion des Funksignals (204) oder von einer ersten Steuerregion des Funksignals (204),
ansprechend auf ein Erfassen der Steuernachricht der Mehrzahl von Steuernachrichten (200), Erfassen eines Signals von einer bestimmten Stelle in dem Funksignal (204), wobei die bestimmte Stelle ein zweiter Teil des gemeinsamen Steuerregion des Funksignals (204) oder eine zweite Steuerregion des Funksignals (204) ist, und Bestimmen der Steuernachricht der Mehrzahl von Steuernachrichten (200) basierend auf dem Signal, das von der bestimmten Stelle erfasst wurde, als eine spezifische Steuernachricht für den Empfänger (202),
wobei,
falls sich die Steuernachricht der Mehrzahl von Steuernachrichten (200) und die redundante Steuernachricht (212) in einer gemeinsamen Steuerregion des Funksignals (204) befinden, die bestimmte Stelle durch einen Versatz in dem Zeit- und/oder Frequenz- und/oder Raumbereich relativ zu der Steuernachricht der Mehrzahl von Steuernachrichten (200) in der gemeinsamen Steuerregion oder relativ zu einer Grenze der gemeinsamen Steuerregion angegeben wird oder
falls sich die Steuernachricht der Mehrzahl von Steuernachrichten (200) in einer ersten Steuerregion des Funks (204) befindet und sich die redundante Steuernachricht (212) in einer zweiten Steuerregion des Funksignals (204) befindet, die bestimmte Stelle durch einen Versatz in dem Zeit- und/oder Frequenz- und/oder Raumbereich relativ zu einer Grenze der zweiten Steuerregion angegeben wird und
die redundante Steuernachricht redundante Informationen in Bezug auf die eine Steuernachricht der Mehrzahl von Steuernachrichten (200) enthält.

15. Ein Computerprogrammprodukt, das Anweisungen aufweist, die bei Ausführung des Programms durch einen Computer bewirken, dass der Computer das Verfahren gemäß Anspruch 14 durchführt.

## Revendications

1. Récepteur (202),
dans lequel le récepteur (202) est configuré pour recevoir un signal radio (204) à partir d'un émetteur (201) d'un système de communication sans fil desservant une pluralité de récepteurs (202, 202', 202"), le signal radio (204) incluant, pour la pluralité de récepteurs (202, 202', 202") desservis par l'émetteur (201), une pluralité de messages de commande (200) et un message de commande redondant (212) pour au moins l'un de la pluralité de messages de commande (200),
dans lequel le récepteur (202) est configuré pour détecter un message de commande de la pluralité de messages de commande (200) à partir d'une première partie d'une région de commande commune du signal radio (204) ou d'une première région de commande du signal radio (204),
dans lequel le récepteur (202) est configuré pour détecter, en réponse à la détection du message de commande de la pluralité de messages de commande (200), un signal provenant d'un emplacement donné du signal radio (204), l'emplacement donné étant une deuxième partie de la région de commande commune du signal radio (204) ou une deuxième région de commande du signal radio (204), et
dans lequel le récepteur (202) est configuré pour déterminer le message de commande de la pluralité de messages de commande (200), comme un message de commande spécifique pour le récepteur (202), sur la base du signal détecté à partir de l'emplacement donné,
**caractérisée en ce que**
dans le cas où le message de commande de la pluralité de messages de commande (200) et le message de commande redondant (212) se trouvent dans une région de commande commune du signal radio (204), l'emplacement donné est indiqué par un décalage dans le domaine temporel et/ou fréquentiel et/ou spatial relativement au message de commande détecté (200) dans la région de commande commune, ou relativement à une limite de la région de commande commune, ou
dans le cas où le message de commande de la pluralité de messages de commande (200) se trouve dans une première région de commande du signal radio (204) et le message de commande redondant (212) se trouve dans une deuxième région de commande du signal radio (204), l'emplacement donné est indiqué par un décalage dans le domaine temporel et/ou fréquentiel et/ou spatial relativement à une limite de la deuxième région de commande, et
le message de commande redondant (212) contient des informations redondantes par rapport au message de commande de la pluralité de messages de commande (200).

2. Récepteur (202) selon la revendication 1, dans lequel
le signal radio (204) comprend un premier signal radio, qui définit une première liaison entre l'émetteur (201) et le récepteur (202), et un deuxième signal radio, qui définit une deuxième liaison entre l'émetteur (201) et le récepteur (202),
dans lequel la région de commande commune fait partie de l'un des premier et deuxième signaux radio, ou fait partie des deux signaux radio, et
dans lequel la première région de commande correspond à une partie des premier et deuxième signaux radio, et la deuxième région de commande correspond à une partie de l'autre signal parmi les premier et deuxième signaux radio.

3. Récepteur (202) selon la revendication 1 ou 2, dans lequel le décalage définit un décalage dans le temps et/ou en fréquence et/ou dans l'espace, ou définit un décalage dans un nombre d'éléments de message de commande, chaque message de commande de la pluralité de messages de commande (200) étant constitué d'un ou plusieurs éléments de message de commande.

4. Récepteur (202) selon l'une quelconque des revendications précédentes, dans lequel le récepteur (202) est préconfiguré avec l'emplacement donné, ou dans lequel l'emplacement donné est indiqué dans le message de commande de la pluralité de messages de commande (200).

5. Récepteur (202) selon la revendication 4, dans lequel le message de commande de la pluralité de messages de commande (200) indique explicitement l'emplacement donné ou inclut une référence à l'un d'une pluralité d'emplacements préconfigurés.

6. Récepteur (202) selon l'une quelconque des revendications précédentes, dans lequel
le signal radio (204) inclut au moins un autre message de commande redondant (212) pour le message de commande de la pluralité de messages de commande (200), et
le récepteur (202) est configuré pour détecter, à partir d'au moins un autre emplacement dans le signal radio, un autre signal, et pour déterminer le message de commande (200) de la pluralité de messages de commande (200), comme le message de commande spécifique au récepteur (202) sur la base du signal détecté à partir de l'emplacement donné et/ou de l'autre signal détecté à partir de l'au moins un autre emplacement.

7. Récepteur (202) selon la revendication 6, dans lequel l'autre message de commande redondant (212) comprend
- une version redondante donnée du message de commande de la pluralité de messages de commande (200) pour procurer une redondance incrémentielle, ou
- un code de correction d'erreur pour le message de commande de la pluralité de messages de commande (200), ou
- une copie du message de commande parmi la pluralité de messages de commande (200).

8. Récepteur (202) selon la revendication 7, dans lequel le message de commande redondant (212) comprend une première version redondante du message de commande (200), et dans lequel d'autres messages de commande redondants respectifs (212) comprennent d'autres versions redondantes respectives.

9. Récepteur (202) selon l'une quelconque des revendications 6 à 8, dans lequel, dans la région de commande du signal radio (204), le message de commande redondant (212) et l'au moins un autre message de commande redondant (212) sont décalés relativement au message de commande spécifique
dans le temps de sorte à définir une structure en peigne, ou
en fréquence de sorte à définir une structure à n décalages, n étant le nombre de messages de commande redondants (212) dans le signal radio (204), ou
dans le temps et en fréquence, de sorte à définir une structure arborescente.

10. Récepteur (202) selon la revendication 9, dans lequel, sur la base d'une qualité de signal d'un signal au niveau d'un nœud fils de la structure arborescente, le récepteur (202) est configuré pour suivre, dans l'arborescence, un chemin de décodage avec l'indicateur de performance clé, KPI, le plus élevé, nécessitant ainsi que tentatives de décodage log k pour k versions redondantes.

11. Récepteur (202) selon la revendication 9 ou 10, dans lequel le message de commande (200) est situé dans le domaine fréquentiel, dans le domaine temporel ou dans le domaine spatial selon une structure arborescente binaire, dans lequel deux versions redondantes ou plus du message de commande, de la pluralité de messages de commande (200), sont stockées dans des nœuds fils respectifs, et le décalage est indiqué par un nœud racine/père correspondant.

12. Récepteur (202) selon l'une quelconque des revendications précédentes, dans lequel
le signal radio (204) fait partie d'une communication de liaison latérale, SL, à partir d'un émetteur (201), tel qu'un équipement utilisateur, vers le récepteur (202),
le message de commande de la pluralité de messages de commande (200) comprend un message SCI,
le signal radio (204) comprend une trame de liaison latérale,
la trame de liaison latérale comprend au moins une région de canaux de commande physiques de liaison latérale, PSCCH, en tant que région de commande, la région PSCCH incluant une pluralité de PSCCH, chacun transportant un message SCI ou un message SCI redondant, et
le récepteur (202) est configuré pour détecter le message de commande de la pluralité de messages de commande (200) à partir du signal radio (204) et à partir du signal au niveau de l'emplacement donné, à l'aide d'une détection aveugle sur la base du CRC du message de commande et du RNTI du récepteur.

13. Système de communication sans fil, comprenant
une pluralité de récepteurs (202, 202', 202"), la pluralité de récepteurs (202, 202', 202") comprenant un récepteur selon l'une quelconque des revendications précédentes, et
un émetteur (201), dans lequel l'émetteur (201) est configuré pour desservir la pluralité de récepteurs (202, 202', 202") d'un système de communication sans fil, et pour fournir le signal radio (204) incluant, pour la pluralité de récepteurs (202, 202', 202") desservis par l'émetteur (201), la pluralité de messages de commande (200) et le message de commande redondant (212) pour au moins un de la pluralité de messages de commande (200).

14. Procédé comprenant :
la réception d'un signal radio (204) à partir d'un émetteur (201) d'un système de communication sans fil desservant une pluralité de récepteurs (202, 202', 202"), le signal radio (204) incluant, pour la pluralité de récepteurs (202, 202', 202") desservis par l'émetteur (201), une pluralité de messages de commande (200) et un message de commande redondant (212) pour au moins l'un de la pluralité de messages de commande (200),
la détection d'un message de commande de la pluralité de messages de commande (200) à partir d'une première partie d'une région de commande commune du signal radio (204) ou d'une première région de commande du signal radio (204),
en réponse à la détection du message de commande de la pluralité de messages de commande (200), la détection d'un signal provenant d'un emplacement donné du signal radio (204), l'emplacement donné étant une deuxième partie de la région de commande commune du signal radio (204) ou une deuxième région de commande du signal radio (204), et
la détermination du message de commande de la pluralité de messages de commande (200), comme un message de commande spécifique pour le récepteur (202), sur la base du signal détecté à partir de l'emplacement donné,
dans lequel
dans le cas où le message de commande de la pluralité de messages de commande (200) et le message de commande redondant (212) se trouvent dans une région de commande commune du signal radio (204), l'emplacement donné est indiqué par un décalage dans le domaine temporel et/ou fréquentiel et/ou spatial relativement au message de commande de la pluralité de messages de commande (200) dans la région de commande commune, ou relativement à une limite de la région de commande commune,
dans le cas où le message de commande de la pluralité de messages de commande (200) se trouve dans une première région de commande du signal radio (204) et le message de commande redondant (212) se trouve dans une deuxième région de commande du signal radio (204), l'emplacement donné est indiqué par un décalage dans le domaine temporel et/ou fréquentiel et/ou spatial relativement à une limite de la deuxième région de commande, et
le message de commande redondant contient des informations redondantes par rapport au seul message de commande de la pluralité de messages de commande (200).

15. Produit de programme informatique comprenant des instructions qui, lorsque le programme est exécuté par un ordinateur, amènent l'ordinateur à mettre en œuvre le procédé selon la revendication 14.
